# FASCICULE DE BREVET EUROPEEN

(11) **EP 3 599 623 B1**
(45) Date de publication et mention de la délivrance du brevet: **21.04.2021**
(21) Numéro de dépôt: 19188396.6
(22) Date de dépôt: 25.07.2019
(51) Int. Cl.: H01F 7/16, E06B 9/68, E06B 9/72, H02K 7/102, F16D 65/092

(54) **ACTIONNEUR ÉLECTROMÉCANIQUE ET INSTALLATION DE PROTECTION CONTRE UN INCENDIE COMPRENANT UN TEL ACTIONNEUR**
ELEKTROMECHANISCHES STELLGLIED UND BRANDSCHUTZANLAGE, DIE EIN SOLCHES STELLGLIED UMFASST
ELECTROMECHANICAL ACTUATOR AND FIRE PROTECTION EQUIPMENT INCLUDING SUCH AN ACTUATOR

(30) Priorité: 26.07.2018 FR 1856949
(43) Date de publication de la demande: 29.01.2020
(73) Titulaire: SIMU, 70100 Arc-Les-Gray (FR)
(72) Inventeur: BRESSON, Christophe, 70700 Cugney (FR)
(74) Mandataire: Lavoix

(56) Documents cités:
- FR-A1- 2 837 548
- GB-A- 2 471 140
- KR-B1- 100 711 213

## Description

La présente invention concerne un actionneur électromécanique. Un tel actionneur électromécanique comprend un dispositif électromagnétique. Ce type de dispositif électromagnétique est plus particulièrement adapté pour un actionneur électromécanique dit tubulaire.

La présente invention concerne également une installation de protection contre un incendie comprenant un écran enroulable sur un tube d'enroulement entraîné en rotation par un tel actionneur électromécanique.

De manière générale, la présente invention concerne le domaine des dispositifs de protection contre un incendie comprenant un dispositif d'entraînement motorisé mettant en mouvement un écran, entre au moins une première position et au moins une deuxième position.

Un dispositif d'entraînement motorisé comprend un actionneur électromécanique d'un élément mobile de protection contre un incendie, tel qu'un rideau, un store, un volet ou tout autre matériel équivalent, appelé par la suite écran.

On connaît déjà le document GB 2 471 140 A qui décrit un actionneur électromécanique pour une installation de protection contre un incendie. L'actionneur électromécanique comprend un carter, un moteur électrique, un réducteur, un dispositif électromagnétique et un arbre de sortie. Le dispositif électromagnétique comprend un électroaimant, une culasse, une mâchoire et un plateau. L'électroaimant comprend un corps et une bobine. Le corps de l'électroaimant est disposé en vis-à-vis de la culasse, dans une configuration assemblée du dispositif électromagnétique. Le dispositif électromagnétique présente un premier état, dans lequel l'arbre de sortie de l'actionneur électromécanique est bloqué en rotation par rapport au carter, et un deuxième état, dans lequel l'arbre de sortie de l'actionneur électromécanique est libre en rotation par rapport au carter.

Cet actionneur électromécanique présente l'inconvénient de commander le dispositif électromagnétique, d'une part, dans un état activé, lorsque le moteur électrique est à l'arrêt et qu'une condition d'incendie est détectée, en fournissant une alimentation en énergie électrique à partir d'une source d'alimentation en énergie électrique auxiliaire et, d'autre part, dans un état désactivé, lorsque le moteur électrique est en fonctionnement, en interrompant une alimentation en énergie électrique à partir de la source d'alimentation en énergie électrique auxiliaire et en utilisant un ressort de rappel.

Ainsi, le premier état du dispositif électromagnétique est un état désactivé, dans lequel le dispositif électromagnétique n'est pas alimenté en énergie électrique, à partir de la source d'alimentation en énergie électrique auxiliaire. En outre, le deuxième état du dispositif électromagnétique est un état activé, dans lequel le dispositif électromagnétique est alimenté en énergie électrique, à partir de la source d'alimentation en énergie électrique auxiliaire.

De cette manière, un tel actionneur électromécanique risque d'être mis hors service dans le cas où la liaison électrique entre la source d'alimentation en énergie électrique auxiliaire et le dispositif électromagnétique est coupée ou perdue, en particulier lors d'un incendie, alors que le dispositif électromagnétique doit être alimenté en énergie électrique pour permettre le déroulement par gravité d'un écran d'un dispositif de protection de l'installation.

Par conséquent, le déroulement de l'écran autour d'un tube d'enroulement du dispositif de protection peut être empêché, puisque le dispositif électromagnétique ne peut pas être commandé à partir de la source d'alimentation en énergie électrique auxiliaire.

En outre, le dispositif électromagnétique présente une surface de freinage limitée à une seule surface de contact entre la mâchoire et le plateau.

Par conséquent, l'encombrement du dispositif électromagnétique et, plus particulièrement, de l'actionneur électromécanique n'est pas minimisé, puisque la surface de freinage entre la mâchoire et le plateau doit être la plus grande possible, pour garantir un effort de freinage souhaité.

Par ailleurs, le dispositif électromagnétique nécessite un ressort de rappel de la mâchoire par rapport au plateau, pour permettre le retour en position de repos de la mâchoire par rapport au plateau dans l'état désactivé du dispositif électromagnétique.

Par conséquent, le coût d'obtention du dispositif électromagnétique est augmenté et donc celui de l'actionneur électromécanique est élevé.

Dans un autre domaine technique, le document FR-A-2 837 548 décrit un frein à disque à étrier flottant pour véhicule avec deux parties d'étrier et un disque disposé entre elles.

La présente invention a pour but de résoudre les inconvénients précités et de proposer un actionneur électromécanique pour une installation de protection contre un incendie, ainsi qu'une installation de protection contre un incendie, permettant de réduire l'encombrement de l'actionneur électromécanique, tout en garantissant une performance de freinage souhaitée et en minimisant les coûts d'obtention de l'actionneur électromécanique, et, en outre, de limiter une consommation électrique en veille.

A cet égard, la présente invention vise, selon un premier aspect, un actionneur électromécanique pour une installation de protection contre un incendie,
l'actionneur électromécanique comprenant au moins :
- un carter,
- un moteur électrique,
- un dispositif électromagnétique, et
- un arbre de sortie,
le dispositif électromagnétique comprenant au moins :
- un électroaimant, l'électroaimant comprenant au moins un corps et une bobine,
- une culasse, le corps de l'électroaimant étant disposé en vis-à-vis de la culasse, dans une configuration assemblée du dispositif électromagnétique,
- une première mâchoire, et
- un plateau, le plateau étant configuré pour se déplacer par rapport à la première mâchoire, suivant la direction d'un axe de rotation, dans la configuration assemblée du dispositif électromagnétique.

Le dispositif électromagnétique présente un premier état, dans lequel le dispositif électromagnétique bloque l'arbre de sortie de l'actionneur électromécanique en rotation par rapport au carter, et un deuxième état, dans lequel l'arbre de sortie de l'actionneur électromécanique est libre en rotation par rapport au carter.

Selon l'invention, le dispositif électromagnétique comprend également au moins :
- une deuxième mâchoire, le plateau étant disposé entre les première et deuxième mâchoires, dans la configuration assemblée du dispositif électromagnétique, la deuxième mâchoire étant configurée pour se déplacer par rapport à la première mâchoire, suivant la direction de l'axe de rotation, dans la configuration assemblée du dispositif électromagnétique,
- une première garniture de friction et une deuxième garniture de friction, la première garniture de friction étant disposée entre la première mâchoire et le plateau, dans la configuration assemblée du dispositif électromagnétique, la deuxième garniture de friction étant disposée entre la deuxième mâchoire et le plateau, dans la configuration assemblée du dispositif électromagnétique, la première garniture de friction étant assemblée contre une première face du plateau, la deuxième garniture de friction étant assemblée contre une deuxième face du plateau, la deuxième face du plateau étant opposée à la première face du plateau.

La culasse est configurée pour se déplacer par rapport au corps de l'électroaimant, suivant la direction de l'axe de rotation, dans la configuration assemblée du dispositif électromagnétique.

En outre, dans la configuration assemblée du dispositif électromagnétique, un entrefer est ménagé entre le corps de l'électroaimant et une paroi d'extrémité de la culasse, au moins lorsque le dispositif électromagnétique est dans son deuxième état.

Ainsi, une telle construction du dispositif électromagnétique permet d'obtenir une surface de freinage agrandie avec des première et deuxième faces de contact appartenant aux première et deuxième mâchoires et, en particulier, une surface de freinage pouvant être doublée par rapport à un dispositif électromagnétique comprenant une seule surface de contact.

De cette manière, la consommation en veille du dispositif électromagnétique et, plus particulièrement, de l'actionneur électromécanique est minimisée.

En outre, l'encombrement du dispositif électromagnétique et, plus particulièrement, de l'actionneur électromécanique est minimisé, puisque le diamètre de l'actionneur électromécanique peut être réduit, tout en garantissant la performance de freinage souhaitée.

Par ailleurs, le coût d'obtention du dispositif électromagnétique et, plus particulièrement, de l'actionneur électromécanique est moins onéreux.

Selon une caractéristique avantageuse d'un mode de réalisation de l'invention, le premier état du dispositif électromagnétique est un état activé, dans lequel le dispositif électromagnétique est alimenté en énergie électrique. En outre, le deuxième état du dispositif électromagnétique est un état désactivé, dans lequel le dispositif électromagnétique n'est pas alimenté en énergie électrique.

Selon une autre caractéristique avantageuse d'un mode de réalisation de l'invention, lorsque le dispositif électromagnétique est dans l'état activé, un courant électrique circule à l'intérieur de l'électroaimant, de sorte à engendrer un champ magnétique au niveau de l'électroaimant, le champ magnétique ainsi généré par l'électroaimant attirant la culasse.

Selon une autre caractéristique avantageuse d'un mode de réalisation de l'invention, le dispositif électromagnétique comprend un élément ressort, l'élément ressort étant disposé entre le corps de l'électroaimant et la culasse au niveau de l'entrefer, dans la configuration assemblée du dispositif électromagnétique.

Selon une autre caractéristique avantageuse d'un mode de réalisation de l'invention, la première mâchoire est solidaire du corps de l'électroaimant, dans la configuration assemblée du dispositif électromagnétique.

Selon une autre caractéristique avantageuse d'un mode de réalisation de l'invention, le dispositif électromagnétique comprend un dispositif de réglage en position de la première mâchoire par rapport au corps de l'électroaimant, le dispositif de réglage en position étant configuré pour mettre en oeuvre un réglage de la position de la première mâchoire par rapport à la deuxième mâchoire et au plateau, de sorte à garantir l'atteinte des états activé et désactivé du dispositif électromagnétique.

Selon une autre caractéristique avantageuse d'un mode de réalisation de l'invention, le plateau du dispositif électromagnétique est accouplé avec un rotor du moteur électrique, dans une configuration assemblée de l'actionneur électromécanique.

Selon une autre caractéristique avantageuse d'un mode de réalisation de l'invention, la deuxième mâchoire est formée par une paroi de la culasse.

Selon une autre caractéristique avantageuse d'un mode de réalisation de l'invention, le plateau et la première mâchoire sont disposés à l'intérieur d'un logement de la culasse.

La présente invention vise, selon un deuxième aspect, une installation de protection contre un incendie comprenant un écran enroulable sur un tube d'enroulement entraîné en rotation par un actionneur électromécanique conforme à l'invention.

Cette installation de protection contre un incendie présente des caractéristiques et avantages analogues à ceux décrits précédemment en relation avec l'actionneur électromécanique selon l'invention, tel que mentionné ci-dessus.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation de protection contre un incendie conforme à un mode de réalisation de l'invention ;
- la figure 2 est une vue schématique en perspective de l'installation illustrée à la figure 1 ;
- la figure 3 est une vue schématique en coupe axiale et partielle de l'installation illustrée aux figures 1 et 2, montrant un actionneur électromécanique de cette installation ;
- la figure 4 est une vue schématique en coupe de l'actionneur électromécanique illustré à la figure 3 ;
- la figure 5 est une vue schématique en perspective et en coupe partielle d'un dispositif électromagnétique et d'un rotor de l'actionneur électromécanique illustré aux figures 3 et 4 ;
- la figure 6 est une vue schématique en perspective, éclatée et en coupe partielle du dispositif électromagnétique et du rotor de l'actionneur électromécaniques, illustrés à la figure 5 ;
- la figure 7 est une vue schématique en coupe du dispositif électromagnétique et d'une partie du rotor de l'actionneur électromécanique, illustrés aux figures 5 et 6, où le dispositif électromagnétique est dans un état désactivé ;
- la figure 8 est une vue analogue à la figure 7, où le dispositif électromagnétique est dans un état activé ;
- la figure 9 est une vue schématique en perspective d'un corps d'une culasse du dispositif électromagnétique illustré aux figures 5 à 8 ;
- la figure 10 est une vue schématique en perspective d'une paroi de la culasse formant une mâchoire du dispositif électromagnétique illustré aux figures 5 à 8 ;
- la figure 11 est une vue schématique en élévation d'un corps d'un électroaimant du dispositif électromagnétique illustré aux figures 5 à 8 ; et
- la figure 12 est une vue schématique en perspective éclatée du dispositif électromagnétique, illustré aux figures 5 à 11, et d'un boîtier, destiné au logement de la culasse et de l'électroaimant.

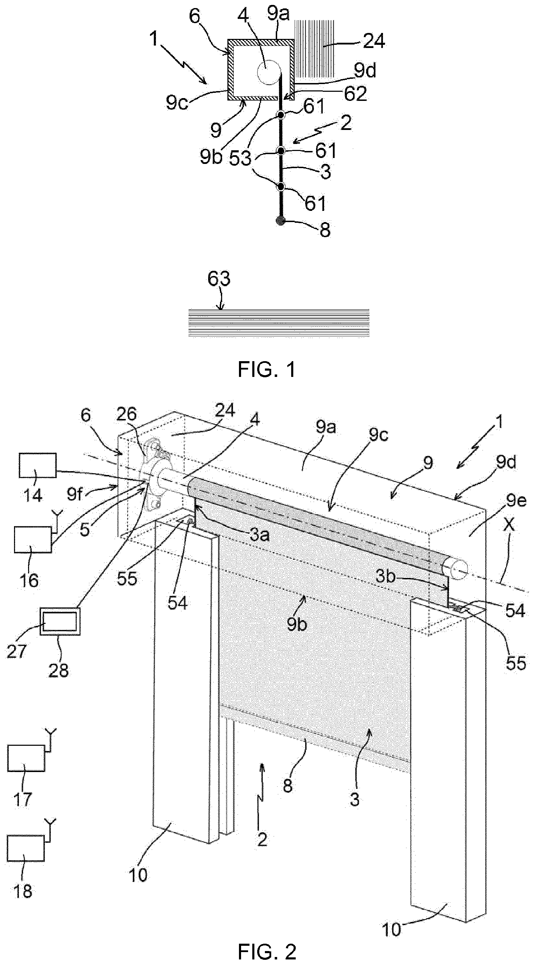

On décrit tout d'abord, en référence aux figures 1 et 2, une installation de protection contre un incendie 1 conforme à l'invention et installée dans un bâtiment.

L'installation de protection contre un incendie 1 comprend un dispositif de protection 2.

Le dispositif de protection 2 permet de séparer, autrement dit de canaliser, des fumées et, éventuellement, des émanations dans et autour d'un bâtiment, ainsi que de former une barrière, en particulier thermique, contre des flammes, lors d'un incendie.

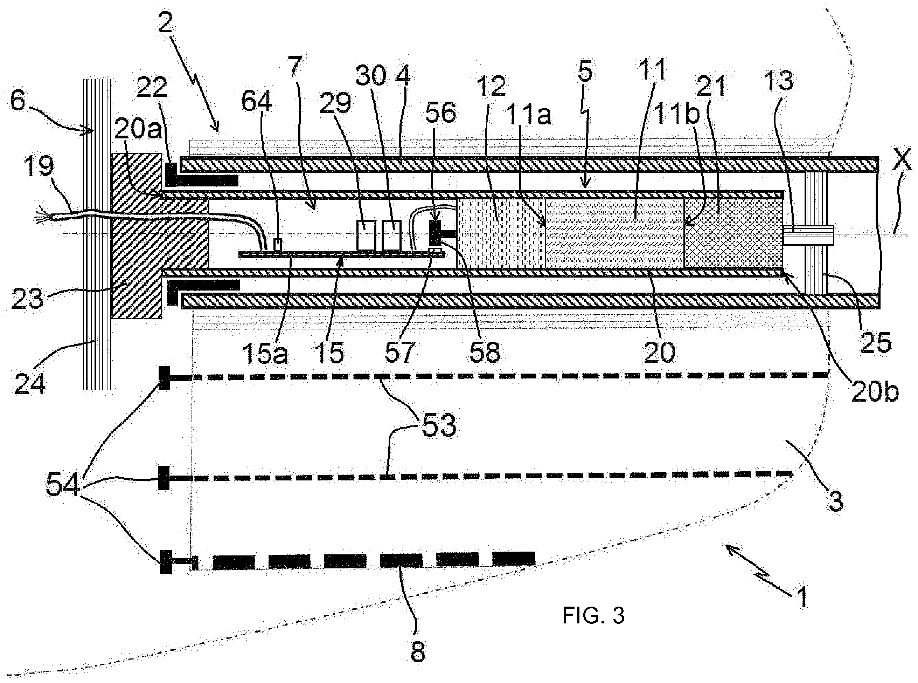

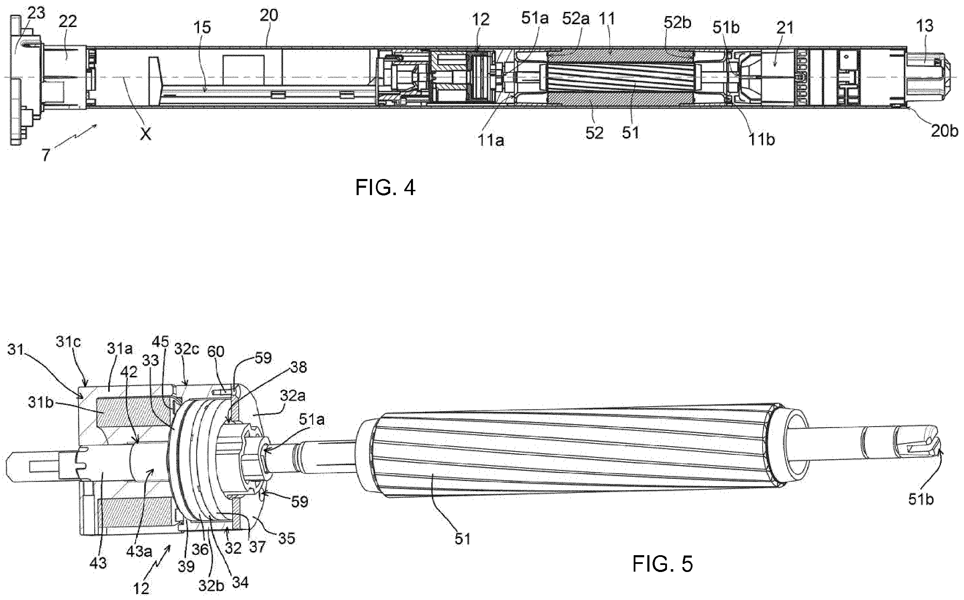

Le dispositif de protection 2 comprend un écran 3, un tube d'enroulement 4, un dispositif d'entraînement motorisé 5 et un dispositif de maintien 6. Le dispositif d'entraînement motorisé 5 comprend un actionneur électromécanique 7, en particulier de type tubulaire, et une unité électronique de contrôle 15, illustrés aux figures 3 et 4.

Ainsi, l'écran 3 du dispositif de protection 2 est enroulé sur le tube d'enroulement 4, lors de l'entraînement de ce dernier par le dispositif d'entraînement motorisé 5.

De cette manière, l'écran 3 est mobile entre une position enroulée, en particulier haute, et une position déroulée, en particulier basse, et inversement.

Avantageusement, le tube d'enroulement 4 peut être réalisé en aluminium ou dans un autre métal.

Avantageusement, l'écran 3 est un rideau enroulable, en particulier en toile.

En pratique, la toile formant l'écran 3 est configurée pour résister au feu.

Avantageusement, la toile peut être réalisée dans un matériau composé de fibres de verre tissées. En outre, la toile peut comprendre une couche d'aluminium.

Avantageusement, le tube d'enroulement 4 présente un diamètre intérieur supérieur au diamètre externe de l'actionneur électromécanique 7, de sorte à insérer au moins en partie l'actionneur électromécanique 7 à l'intérieur du tube d'enroulement 4, lors de l'assemblage du dispositif de protection 2.

Ainsi, dans l'état monté du dispositif de protection 2, l'actionneur électromécanique 7 est inséré, en partie ou en totalité, dans le tube d'enroulement 4.

Dans une telle installation de protection contre un incendie 1, l'actionneur électromécanique 7 permet de mettre en rotation le tube d'enroulement 4, de sorte à enrouler l'écran 3 et, éventuellement, à dérouler l'écran 3.

Ainsi, l'écran 3 est configuré pour être remonté au moyen de l'actionneur électromécanique 7, par enroulement autour du tube d'enroulement 4. En outre, l'écran 3 est configuré pour être abaissé par gravité et, éventuellement, au moyen de l'actionneur électromécanique 7, par déroulement par rapport au tube d'enroulement 4.

Avantageusement, le dispositif de maintien 6 comprend un caisson 9. En outre, le tube d'enroulement 4 est disposé à l'intérieur du caisson 9.

Ainsi, l'écran 3 s'enroule et se déroule autour du tube d'enroulement 4 et est logé au moins en partie à l'intérieur du caisson 9.

Avantageusement, le caisson 9 est fixé à un plafond d'une pièce du bâtiment ou à une paroi inférieure d'un balcon, ou encastré dans un plafond suspendu d'une pièce du bâtiment.

Avantageusement, le caisson 9 comprend une paroi supérieure 9a, une paroi inférieure 9b, une paroi avant 9c, une paroi arrière 9d, une première paroi latérale 9e et une deuxième paroi latérale 9f.

Avantageusement, la paroi inférieure 9b du caisson 9 comprend une fente 62, de sorte à permettre le passage de l'écran 3 au travers de celle-ci, lors de l'enroulement et du déroulement de l'écran 3.

Avantageusement, le dispositif de maintien 6 peut également comprendre deux supports 26. Chaque support 26 coopère, autrement dit est configuré pour coopérer, avec une extrémité du tube d'enroulement 4, dans une configuration assemblée du dispositif de protection 2. Un seul des deux supports 26 est illustré à la figure 2, de sorte à faciliter la lecture de celle-ci.

Avantageusement, le dispositif de protection 2 comprend également une barre de charge 8 pour exercer une tension sur l'écran 3.

Avantageusement, une première extrémité de l'écran 3, en particulier une extrémité supérieure de l'écran 3 dans une configuration assemblée du dispositif de protection 2 dans l'installation 1, est fixée au tube d'enroulement 4. En outre, une deuxième extrémité de l'écran 3, en particulier l'extrémité inférieure de l'écran 3 dans la configuration assemblée du dispositif protection 2 dans l'installation 1, est fixée à la barre de charge 8.

Dans un exemple de réalisation non représenté, la première extrémité de l'écran 3 présente un ourlet au travers duquel est disposée une tige, en particulier en métal. Cet ourlet réalisé au niveau de la première extrémité de l'écran 3 est obtenu au moyen d'une couture de la toile formant l'écran 3. Lors de l'assemblage de l'écran 3 sur le tube d'enroulement 4, l'ourlet et la tige situés au niveau de la première extrémité de l'écran 3 sont insérés par coulissement dans une rainure ménagée sur la face externe du tube d'enroulement 4, en particulier sur toute la longueur du tube d'enroulement 4, de sorte à solidariser l'écran 3 avec le tube d'enroulement 4 et à pouvoir enrouler et dérouler l'écran 3 autour du tube d'enroulement 4.

Avantageusement, la position enroulée correspond à une position de fin de course haute prédéterminée ou à la mise en appui de la barre de charge 8 de l'écran 3 contre un bord du caisson 9. En outre, la position déroulée correspond à une position de fin de course basse prédéterminée ou à la mise en appui de la barre de charge 8 de l'écran 3 contre un seuil 63, ou encore au déroulement complet de l'écran 3.

Avantageusement, la barre de charge 8 est configurée pour obturer la fente 62 du caisson 9, lorsque l'écran 3 est dans la position enroulée.

Avantageusement, le dispositif de protection 2 comprend également deux coulisses latérales 10. En outre, chaque coulisse latérale 10 comprend une gorge 55 à l'intérieur de laquelle est guidée un bord latéral 3a, 3b de l'écran 3, ainsi qu'une extrémité latérale, non représentée, de la barre de charge 8 fixée à la deuxième extrémité de l'écran 3.

Ainsi, lors de l'enroulement ou du déroulement de l'écran 3, les bords latéraux 3a, 3b de l'écran 3 et les extrémités latérales de la barre de charge 8 sont retenus dans les coulisses latérales 10, de sorte à garantir un guidage latéral de l'écran 3.

Avantageusement, les coulisses latérales 10 s'étendent suivant une direction verticale, dans la configuration assemblée du dispositif protection 2 dans l'installation 1. En outre, les coulisses latérales 10 s'étendent à partir du seuil 63 jusqu'au caisson 9.

Avantageusement, le caisson 9 et les coulisses latérales 10 forment un cadre à l'intérieur duquel l'écran 3 peut être déplacé. Ce cadre peut être fermé par une barre supplémentaire, non représentée, reliant les deux coulisses latérales 10 au niveau du seuil 63.

Avantageusement, l'écran 3 comprend une pluralité de lattes transversales 53.

Ainsi, les lattes transversales 53 permettent de garantir un maintien de l'écran 3 entre les deux coulisses latérales 10.

Ici, les lattes transversales 53 s'étendent entre les deux bords latéraux 3a, 3b de l'écran 3.

Dans un exemple de réalisation, chaque latte transversale 53 est disposée à l'intérieur d'une poche 61 ménagée dans l'écran 3. Chaque poche 61 réalisée dans l'écran 3 peut être obtenue au moyen de coutures de la toile formant l'écran 3. Lors de l'assemblage de l'écran 3, chaque latte transversale 53 est insérée par coulissement dans l'une des poches 61 ménagées dans l'écran 3.

Avantageusement, l'écran 3 comprend au niveau de chacun de ses bords latéraux 3a, 3b une pluralité d'éléments de retenue 54. Chaque élément de retenue 54 coopère, autrement dit est configuré pour coopérer, avec la gorge 55 de l'une des coulisses latérales 10, dans une configuration assemblée de l'installation 1.

Ainsi, lors de l'enroulement ou du déroulement de l'écran 3, les éléments de retenue 54 disposés sur les bords latéraux 3a, 3b de l'écran 3 sont retenus dans les coulisses latérales 10, de sorte à garantir un guidage latéral de l'écran 3.

De cette manière, chaque gorge 55 ménagée dans l'une des coulisses latérales 10 permet d'empêcher le retrait d'un élément de retenue 54 disposé sur l'un des bords latéraux 3a, 3b de l'écran 3, lors du déplacement de l'écran 3 entre la position enroulée et la position déroulée.

Ici, chaque latte transversale 53 de l'écran 3 comprend un élément de retenue 54 à chacune de ses extrémités.

Avantageusement, les éléments de retenue 54 sont réalisés sous la forme de crochets en forme de T.

Avantageusement, la barre de charge 8 peut comprendre un élément de retenue 54 à chacune de ses extrémités latérales, de sorte à coopérer avec la gorge 55 de l'une des coulisses latérales 10, dans la configuration assemblée de l'installation 1.

L'actionneur électromécanique 7 comprend au moins un carter 20, un moteur électrique 11, un dispositif électromagnétique 12 et un arbre de sortie 13.

Le dispositif électromagnétique 12 présente un premier état, dit de freinage, dans lequel l'arbre de sortie 13 de l'actionneur électromécanique 7 est bloqué en rotation par rapport au carter 20, au moyen du dispositif électromagnétique 12, et un deuxième état, dit de libération, dans lequel l'arbre de sortie 13 de l'actionneur électromécanique 7 est libre en rotation par rapport au carter 20.

Avantageusement, l'actionneur électromécanique 7, en particulier le moteur électrique 11, est alimenté en énergie électrique par un réseau d'alimentation électrique du secteur, en particulier par le réseau alternatif commercial.

La tension du réseau d'alimentation électrique ou tension secteur présente, par exemple, une valeur de 230 VRMS (valeur de crête de 325V) pour le réseau électrique français et une fréquence de 50 Hz.

La tension secteur peut présenter des valeurs différentes, en fonction du réseau électrique du pays dans lequel est montée l'installation 1.

Avantageusement, le dispositif électromagnétique 12 est connecté, autrement dit configuré pour être connecté, électriquement à une source d'alimentation en énergie électrique auxiliaire 27.

Avantageusement, le premier état du dispositif électromagnétique 12 est un état activé, dans lequel le dispositif électromagnétique 12 est alimenté en énergie électrique, en particulier à partir de la source d'alimentation en énergie électrique auxiliaire 27. En outre, le deuxième état du dispositif électromagnétique 12 est un état désactivé, dans lequel le dispositif électromagnétique 12 n'est pas alimenté en énergie électrique, en particulier à partir de la source d'alimentation en énergie électrique auxiliaire 27.

Ainsi, l'alimentation en énergie électrique du dispositif électromagnétique 12 par la source d'alimentation en énergie électrique auxiliaire 27 permet de maintenir en position l'arbre de sortie 13 de l'actionneur électromécanique 7 par rapport au carter 20, c'est-à-dire empêcher un entraînement en rotation de cet arbre de sortie 13 autour de l'axe de rotation X, qui peut résulter soit du poids de l'écran 3 et, éventuellement, du poids de la barre de charge 8, soit de l'activation du moteur électrique 11.

Avantageusement, la source d'alimentation en énergie électrique auxiliaire 27 est différente du réseau d'alimentation électrique du secteur.

Ainsi, le dispositif électromagnétique 12 est alimenté en énergie électrique de manière indépendante par rapport à l'alimentation en énergie électrique du moteur électrique 11.

En pratique, la source d'alimentation en énergie électrique auxiliaire 27 est au moins une batterie, pouvant être rechargeable.

Avantageusement, la tension de la source d'alimentation en énergie électrique auxiliaire 27 est une tension continue et présente, par exemple, une valeur de 24 V.

La tension de la source d'alimentation en énergie électrique n'est pas limitative et peut être différente.

Avantageusement, l'arbre de sortie 13 de l'actionneur électromécanique 7 est maintenu en position au moyen du dispositif électromagnétique 12, tant qu'aucun signal de commande S n'est reçu par l'unité électronique de contrôle 15 pour désactiver le dispositif électromagnétique 12.

Ainsi, le dispositif électromagnétique 12 empêche le déroulement du tube d'enroulement 4 et, par conséquent, de l'écran 3, tant qu'aucun signal de commande S ne désactive le dispositif électromagnétique 12, de sorte à libérer l'arbre de sortie 13 de l'actionneur électromécanique 7.

De cette manière, le dispositif électromagnétique 12 est configuré pour retenir l'écran 3 dans la position enroulée ou dans une position remontée par rapport dispositif de maintien 6 et, plus particulièrement, au caisson 9, tant qu'aucun signal de commande S n'est reçu par l'unité électronique de contrôle 15, correspondant à une condition d'incendie. En outre, le dispositif électromagnétique 12 est configuré pour permettre le déroulement de l'écran 3 autour du tube d'enroulement 4 jusqu'à la position déroulée, dès qu'un signal de commande S est reçu par l'unité électronique de contrôle 15, correspondant à une condition d'incendie.

Le déroulement de l'écran 3 autour du tube d'enroulement 4 jusqu'à la position déroulée est mis en oeuvre par gravité, en particulier au moyen de la barre de charge 8, suite à la coupure de l'alimentation électrique du dispositif électromagnétique 12, qui est, par conséquent, désactivé.

Avantageusement, le signal de commande S correspond à un signal de commande émis soit par un dispositif d'alarme incendie 14 soit par une unité de commande 16, 17.

Ici, le dispositif d'alarme incendie 14 fait partie intégrante de l'installation 1.

Ainsi, le signal de commande S peut être émis soit automatiquement, par le dispositif d'alarme incendie 14 ou l'unité de commande 16, 17, soit manuellement, par l'unité de commande 16, 17.

Avantageusement, lorsque le signal de commande S est émis par le dispositif d'alarme incendie 14, le dispositif électromagnétique 12 libère l'arbre de sortie 13 de l'actionneur électromécanique 7, de sorte que l'écran 3 atteigne la position déroulée par le déroulement de l'écran 3 par rapport au tube d'enroulement 4 par gravité.

Avantageusement, le dispositif électromagnétique 12 est commandé par le dispositif d'alarme incendie 14, en particulier au travers de l'unité électronique de contrôle 15.

Ici, le dispositif d'alarme incendie 14 est relié en liaison filaire avec le dispositif électromagnétique 12 et, plus particulièrement, avec l'actionneur électromécanique 7.

Avantageusement, tant qu'aucune condition d'incendie n'est détectée par le dispositif d'alarme incendie 14, l'écran 3 est retenu dans la position enroulée au moyen du dispositif électromagnétique 12.

En outre, dès qu'une condition d'incendie est détectée par le dispositif d'alarme incendie 14, en particulier une détection de fumée et/ou de feu, le dispositif électromagnétique 12 est désactivé par une coupure ou une perte d'alimentation en énergie électrique, de sorte que l'écran 3 se déroule par rapport au tube d'enroulement 4 vers la position déroulée.

Ainsi, le déroulement de l'écran 3 en position déroulée permet de former une barrière contre la fumée et/ou le feu.

Avantageusement, la coupure ou la perte d'alimentation en énergie électrique du dispositif électromagnétique 12 peut intervenir dans un mode de test, de sorte à simuler une condition d'incendie, ou dans un mode de sécurité, dans le cas d'une détection d'incendie par le dispositif d'alarme incendie 14, du dispositif de protection 2.

Avantageusement, suite à la restauration de l'alimentation en énergie électrique du dispositif électromagnétique 12 et, plus particulièrement, de l'actionneur électromécanique 7, le moteur électrique 11 de l'actionneur électromécanique 7 est mis en fonctionnement pour enrouler l'écran 3, en particulier jusqu'à la position enroulée, puis l'arbre de sortie 13 de l'actionneur électromécanique 7 est maintenu en position au moyen du dispositif électromagnétique 12, de sorte à retenir l'écran 3 en position enroulée.

Avantageusement, l'enroulement de l'écran 3, suite à la restauration de l'alimentation en énergie électrique, est mis en œuvre soit automatiquement, en particulier par l'unité électronique de contrôle 15, soit manuellement au moyen de l'unité de commande 16, 17.

Avantageusement, le dispositif d'entraînement motorisé 5 peut être commandé par une unité de commande locale 16.

Avantageusement, l'unité de commande locale 16 peut être reliée en liaison filaire ou non filaire avec une unité de commande centrale 17. L'unité de commande centrale 17 peut piloter l'unité de commande locale 16, ainsi que d'autres unités de commande locales similaires et réparties dans le bâtiment.

Avantageusement, l'unité électronique de contrôle 15, l'unité de commande locale 16 et/ou l'unité de commande centrale 17 peuvent être en communication avec un ou plusieurs capteurs, notamment de température ou de fumée.

L'unité de commande locale 16 et/ou l'unité de commande centrale 17 peut également être en communication avec un serveur 18, de sorte à contrôler l'actionneur électromécanique 7 suivant des données mises à disposition à distance par l'intermédiaire d'un réseau de communication, en particulier un réseau internet pouvant être relié au serveur 18.

L'unité électronique de contrôle 15 peut être commandée à partir de l'unité de commande locale 16. L'unité de commande locale 16 est pourvue d'un clavier de commande, non représenté. Le clavier de commande de l'unité de commande locale 16 comprend des éléments de sélection et, éventuellement, des éléments d'affichage.

A titre d'exemples nullement limitatifs, les éléments de sélection peuvent être des boutons poussoirs ou des touches sensitives, les éléments d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 16 peut être un point de commande fixe ou nomade. Un point de commande fixe correspond à un boîtier de commande destiné à être fixé sur une façade d'un mur du bâtiment. Un point de commande nomade correspond à une télécommande.

L'unité de commande locale 16 permet de commander directement l'unité électronique de contrôle 15 en fonction d'une sélection effectuée par l'utilisateur.

L'unité de commande locale 16 permet à l'utilisateur d'intervenir directement sur l'actionneur électromécanique 7 du dispositif d'entraînement motorisé 5 par l'intermédiaire de l'unité électronique de contrôle 15 associée à ce dispositif d'entraînement motorisé 5, ou d'intervenir indirectement sur l'actionneur électromécanique 7 du dispositif d'entraînement motorisé 5 par l'intermédiaire de l'unité de commande centrale 17.

Le dispositif d'entraînement motorisé 5, en particulier l'unité électronique de contrôle 15, est, de préférence, configuré pour exécuter des ordres de commande d'enroulement de l'écran 3 et, éventuellement, de déroulement de l'écran 3, ces ordres de commande pouvant être émis, notamment, par l'unité de commande locale 16 ou par l'unité de commande centrale 17.

On décrit à présent, plus en détail et en référence aux figures 3 et 4, l'actionneur électromécanique 7 appartenant à l'installation domotique des figures 1 et 2.

Le moteur électrique 11 comprend un rotor 51 et un stator 52 positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 7, permettant le déplacement de l'écran 3 du dispositif de protection 3, comprennent au moins l'unité électronique de contrôle 15. Cette unité électronique de contrôle 15 est apte à mettre en fonctionnement le moteur électrique 11 de l'actionneur électromécanique 7, et, en particulier, permettre l'alimentation en énergie électrique du moteur électrique 11.

Ainsi, l'unité électronique de contrôle 15 commande, notamment, le moteur électrique 11, de sorte à ouvrir ou, éventuellement, fermer l'écran 3, comme décrit précédemment.

L'unité électronique de contrôle 15 comprend également un module de réception d'ordres de commande 64, les ordres de commande étant émis par un émetteur d'ordres, tel que le dispositif d'alarme incendie 14, l'unité de commande locale 16 ou l'unité de commande centrale 17 destinée à commander l'actionneur électromécanique 7.

Préférentiellement, le module de réception d'ordres de commande 64 de l'unité électronique de contrôle 15 est de type filaire.

Le module de réception d'ordres de commande 64 peut également permettre la réception d'ordres de commande transmis par des moyens sans fil. En particulier, le module de réception d'ordres de commande 64 est configuré pour recevoir des ordres de commande radioélectriques.

Les moyens de commande de l'actionneur électromécanique 7 comprennent des moyens matériels et/ou logiciels.

A titre d'exemple nullement limitatif, les moyens matériels peuvent comprendre au moins un microcontrôleur.

Avantageusement, le dispositif d'entraînement motorisé 5 et, plus particulièrement, l'actionneur électromécanique 7 comprend un dispositif de comptage 56, tel qu'illustré à la figure 3. Le dispositif de comptage 56 comprend au moins un capteur 57, en particulier de position. Le dispositif de comptage 56 est configuré pour coopérer avec l'unité électronique de contrôle 15. En outre, le dispositif de comptage 56 et l'unité électronique de contrôle 15 sont configurés pour déterminer une position, pouvant être appelée « courante », de l'écran 3 et, plus particulièrement, de la barre de charge 8 par rapport au tube d'enroulement 4.

Avantageusement, l'unité électronique de contrôle 15 est configurée pour surveiller au moins un signal P provenant du dispositif de comptage 56 à une fréquence f prédéterminée, notamment en fonction de la position de l'écran 3.

Ici, le dispositif de comptage 56 comprend un seul capteur 57.

Le nombre de capteurs du dispositif de comptage n'est pas limitatif et peut être différent. Il peut être, notamment, supérieur ou égal à deux.

Dans l'exemple de réalisation illustré à la figure 3, le dispositif de comptage 56 est de type magnétique.

Ici et comme illustré à la figure 3, le dispositif de comptage 56 comprend une roue codeuse 58 et un capteur à effet Hall 57. La roue codeuse 58 est reliée à une extrémité du rotor 51 du moteur électrique 11, en particulier la première extrémité 51a du rotor 51. En outre, le capteur à effet Hall 57 est assemblé sur une carte électronique 15a de l'unité électronique de contrôle 15.

Ainsi, le dispositif de comptage 56 permet de déterminer le nombre de tours réalisés par le rotor 51 du moteur électrique 11.

En variante, non représentée, le dispositif de comptage 56 permet de déterminer le nombre de tours réalisés par l'arbre de sortie 13 de l'actionneur électromécanique 7.

Le type de dispositif de comptage n'est pas limitatif et peut être différent, en particulier de type optique, par exemple un encodeur équipé d'un ou plusieurs capteurs optiques.

Avantageusement, l'unité électronique de contrôle 15 et, plus particulièrement, le microcontrôleur de l'unité électronique de contrôle 15 comprend au moins une mémoire configurée pour mémoriser la position courante de l'écran 3 déterminée au moyen du dispositif de comptage 56.

Ici, l'actionneur électromécanique 7 comprend un câble d'alimentation électrique 19 permettant son alimentation en énergie électrique à partir du réseau d'alimentation électrique du secteur.

Avantageusement, l'unité électronique de contrôle 15 peut être alimentée en énergie électrique au moyen du câble d'alimentation électrique 19, d'une part, connecté électriquement au réseau d'alimentation électrique du secteur et, d'autre part, connecté électriquement à la source d'alimentation en énergie électrique auxiliaire 27.

Avantageusement, le carter 20 de l'actionneur électromécanique 7 est de forme cylindrique et ouvert à chacune de ses extrémités 20a, 20b.

Ici, le carter 20 de l'actionneur électromécanique 7 est un tube présentant une section circulaire.

Dans un mode de réalisation, le carter 20 est réalisé dans un matériau métallique.

La matière du carter de l'actionneur électromécanique n'est pas limitative et peut être différente et, en particulier, une matière plastique.

Avantageusement, l'actionneur électromécanique 7 comprend également un réducteur 21.

Avantageusement, le réducteur 21 comprend au moins un étage de réduction. L'étage de réduction peut être un train d'engrenages de type épicycloïdal.

Le type et le nombre d'étages de réduction du réducteur ne sont pas limitatifs.

Avantageusement, le réducteur 21 est de type réversible.

Avantageusement, le réducteur 21 est accouplé avec le rotor 51 du moteur électrique 11, dans une configuration assemblée de l'actionneur électromécanique 7.

Avantageusement, le réducteur 21 est conçu pour garantir une vitesse de déplacement de l'écran 3 adaptée lors du déroulement par gravité de l'écran 3, en particulier par le poids de l'écran 3 et, éventuellement, au moyen de la barre de charge 8, suite à la désactivation du dispositif électromagnétique 12.

Le tube d'enroulement 4 est entraîné en rotation autour de l'axe de rotation X et du carter 20 de l'actionneur électromécanique 7 soutenu par l'intermédiaire de deux liaisons pivot. La première liaison pivot est réalisée au niveau d'une première extrémité du tube d'enroulement 4 au moyen d'une couronne 22 insérée autour et à une première extrémité 20a du carter 20 de l'actionneur électromécanique 7. La couronne 22 permet ainsi de réaliser un palier. La deuxième liaison pivot, non représentée à la figure 3, est réalisée au niveau d'une deuxième extrémité du tube d'enroulement 4, opposée à sa première extrémité.

L'actionneur électromécanique 7 comprend un support de couple 23, en particulier une tête d'obturation et de reprise de couple, pouvant également être appelé un point fixe de l'actionneur électromécanique 7. Le support de couple 23 est en saillie à une extrémité 20a du carter 20 de l'actionneur électromécanique 7, en particulier la première extrémité 20a du carter 20 recevant la couronne 22. Le support de couple 23 de l'actionneur électromécanique 7 permet ainsi de fixer l'actionneur électromécanique 7 sur un bâti 24, en particulier à une joue du caisson 9, appartenant par exemple à sa deuxième paroi latérale 9f, ou sur l'un des supports 26.

Ici, le bâti 24 fait également partie intégrante du dispositif de maintien 6 de l'écran 3.

En outre, le support de couple 23 de l'actionneur électromécanique 7 peut permettre d'obturer la première extrémité 20a du carter 20.

Par ailleurs, le support de couple 23 de l'actionneur électromécanique 7 peut permettre de supporter l'unité électronique de contrôle 15.

Une extrémité de l'arbre de sortie 13 est en saillie par rapport au carter 20 de l'actionneur électromécanique 7, en particulier par rapport à une deuxième extrémité 20b du carter 20 opposée à sa première extrémité 20a.

L'arbre de sortie 13 de l'actionneur électromécanique 7 est configuré pour entraîner en rotation un élément de liaison 25 relié au tube d'enroulement 4. L'élément de liaison 25 est réalisé sous la forme d'une roue.

Lors de la mise en fonctionnement de l'actionneur électromécanique 7, le moteur électrique 11 et le réducteur 21 entraînent en rotation l'arbre de sortie 13. En outre, l'arbre de sortie 13 de l'actionneur électromécanique 7 entraîne en rotation le tube d'enroulement 4 par l'intermédiaire de l'élément de liaison 25.

Ainsi, le tube d'enroulement 4 entraîne en rotation l'écran 3 du dispositif de protection 2.

Le moteur électrique 11, le réducteur 21 et le dispositif électromagnétique 12 sont montés à l'intérieur du carter 20 de l'actionneur électromécanique 7.

Avantageusement et tel qu'illustré aux figures 3 et 4, le dispositif électromagnétique 12 est disposé d'un premier côté 11a du moteur électrique 11. En outre, le réducteur 21 est disposé d'un deuxième côté 11b du moteur électrique 11. Le premier côté 11a du moteur électrique 11 est opposé au deuxième côté 11b du moteur électrique 11, suivant la direction de l'axe de rotation X.

Ainsi, le dispositif électromagnétique 12 est accouplé avec une première extrémité 51a du rotor 51 du moteur électrique 11. En outre, le réducteur 21 est accouplé avec une deuxième extrémité 51b du rotor 51 du moteur électrique 11. La première extrémité 51a du rotor 51 est opposée à la deuxième extrémité 51 b du rotor 51.

De cette manière, le rotor 51 est traversant par rapport au stator 52 du moteur électrique 11, autrement dit dépasse au niveau de chaque extrémité 52a, 52b du stator 52.

L'actionneur électromécanique 11 peut également comprendre un dispositif de détection de fin de course et/ou d'obstacle, pouvant être mécanique ou électronique.

Ici, et tel qu'illustré aux figures 3 et 4, l'unité électronique de contrôle 15 est disposée à l'intérieur du carter 20 de l'actionneur électromécanique 7.

Ainsi, l'unité électronique de contrôle 15 est intégrée à l'intérieur du carter 20 de l'actionneur électromécanique 7.

Dans un autre mode de réalisation, l'unité électronique de contrôle 15 est disposée à l'extérieur du carter 20 de l'actionneur électromécanique 7 et, en particulier, montée sur le bâti 24, dans le support de couple 23 ou dans le caisson 9.

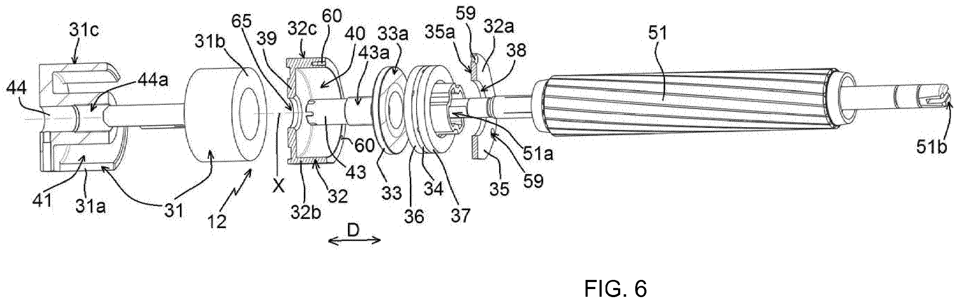

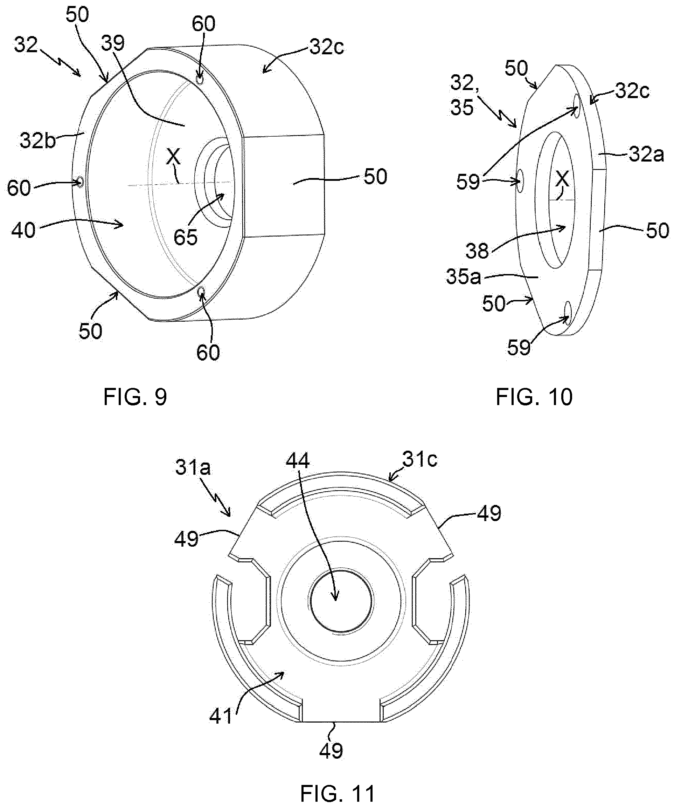

On décrit à présent, en référence aux figures 5 à 12, le dispositif électromagnétique 12 de l'actionneur électromécanique 7, illustré aux figures 3 et 4 et conforme à un mode de réalisation de l'invention.

Le dispositif électromagnétique 12 est activé, suite à son alimentation en énergie électrique par la source d'alimentation en énergie électrique auxiliaire 27, pour retenir l'écran 3 dans la position enroulée ou dans une position remontée par rapport au dispositif de maintien 6 et, plus particulièrement, au caisson 9, autrement dit tant qu'aucun signal de commande S n'est reçu par l'unité électronique de contrôle 15 correspondant à une condition d'incendie.

Par conséquent, un tel fonctionnement du dispositif électromagnétique 12 et, plus particulièrement, du dispositif de protection 2 engendre une consommation électrique en veille, c'est-à-dire dans l'attente de la réception d'un signal de commande S par l'unité électronique de contrôle 15, pour garantir le maintien en position de l'arbre de sortie 13 de l'actionneur électromécanique 7 par rapport autour du carter 20 et donc de l'écran 3 en position enroulée.

Le dispositif électromagnétique 12 est désactivé, suite à une coupure d'alimentation en énergie électrique à partir de la source d'alimentation en énergie électrique auxiliaire 27, pour permettre le déroulement de l'écran 3 autour du tube d'enroulement 4 jusqu'à la position déroulée, autrement dit dès qu'un signal de commande S est reçu par l'unité électronique de contrôle 15 correspondant à une condition d'incendie.

Avantageusement, la source d'alimentation en énergie électrique auxiliaire 27 est disposée à l'intérieur d'un coffret 28, pouvant être situé à l'extérieur du caisson 9, comme illustré à la figure 2.

Avantageusement, l'unité électronique de contrôle 15 comprend au moins un premier élément de commande 29 de l'alimentation en énergie électrique du moteur électrique 7 à partir du réseau d'alimentation électrique du secteur et au moins un deuxième élément de commande 30 de l'alimentation en énergie électrique du dispositif électromagnétique 12 à partir de la source d'alimentation en énergie électrique auxiliaire 27, comme illustré à la figure 3.

Avantageusement, les premier et deuxième éléments de commande 29, 30 de l'unité électronique de contrôle 15 peuvent être des interrupteurs.

Lorsque le moteur électrique 11 est alimenté en énergie électrique, en particulier lors de l'enroulement de l'écran 3, à partir du réseau d'alimentation électrique du secteur, le dispositif électromagnétique 12 est désactivé, autrement dit non-alimenté en énergie électrique à partir de la source d'alimentation en énergie électrique auxiliaire 27. L'alimentation en énergie électrique du moteur électrique 11 est mise en œuvre par l'intermédiaire du premier élément de commande 29. En outre, la désactivation du dispositif électromagnétique 12 est mise en œuvre au moyen du deuxième élément de commande 30.

Par ailleurs, lorsque le moteur électrique 11 est non-alimenté en énergie électrique, à partir du réseau d'alimentation électrique du secteur, le dispositif électromagnétique 12 est soit activé, en particulier lors du maintien en position de l'écran 3 en position enroulée, autrement dit alimenté en énergie électrique à partir de la source d'alimentation en énergie électrique auxiliaire 27, soit désactivé, en particulier lorsqu'une condition d'incendie est déterminée pour permettre le déroulement de l'écran 3 par gravité, autrement dit non-alimenté en énergie électrique à partir de la source d'alimentation en énergie électrique auxiliaire 27. La non-alimentation en énergie électrique du moteur électrique 11 est mise en œuvre par l'intermédiaire du premier élément de commande 29. En outre, l'activation ou la désactivation du dispositif électromagnétique 12 est mise en œuvre, par l'intermédiaire du deuxième élément de commande 30.

Le dispositif électromagnétique 12 comprend au moins un électroaimant 31, une culasse 32, une première mâchoire 33, un plateau 34 et une deuxième mâchoire 35. L'électroaimant 31 comprend un corps 31a et une bobine 31b. Le corps 31a de l'électroaimant 31 est disposé en vis-à-vis de la culasse 32, dans une configuration assemblée du dispositif électromagnétique 12. Le plateau 34 est disposé entre les première et deuxième mâchoires 33, 35, dans la configuration assemblée du dispositif électromagnétique 12.

Avantageusement, la bobine 31b est disposée à l'intérieur d'un logement 41 du corps 31a de l'électroaimant 31.

Avantageusement, l'électroaimant 31 est configuré pour générer un champ magnétique C, lorsque le dispositif électromagnétique 12 est alimenté en énergie électrique par la source d'alimentation en énergie électrique auxiliaire 27.

Avantageusement, le corps 31a de l'électroaimant 31 et la culasse 32 sont réalisés dans un matériau métallique, tel que par exemple un acier.

En variante, non représentée, la culasse 32 présente uniquement une partie métallique. En outre, la partie métallique de la culasse 32 est disposée en vis-à-vis du corps 31a de l'électroaimant 31, dans la configuration assemblée du dispositif électromagnétique 12.

Avantageusement, la partie métallique de la culasse 32 est solidaire d'un corps 32b de la culasse 32.

La partie métallique de la culasse 32 peut être un anneau fixé sur le corps 32b de la culasse 32, par exemple par collage.

Dans ce cas où la partie métallique de la culasse 32 est distincte du corps 32b de la culasse 32, le corps 32b de la culasse 32 peut être réalisé dans une matière plastique.

Avantageusement, la culasse 32 ou au moins une partie de la culasse 32 coopérant, autrement dit configurée pour coopérer, avec l'électroaimant 31, dans la configuration assemblée du dispositif électromagnétique 12, est dans un matériau magnétique.

Le dispositif électromagnétique 12 comprend également au moins une première garniture de friction 36 et une deuxième garniture de friction 37. La première garniture de friction 36 est disposée entre la première mâchoire 33 et le plateau 34, dans la configuration assemblée du dispositif électromagnétique 12. En outre, la deuxième garniture de friction 37 est disposée entre la deuxième mâchoire 35 et le plateau 34, dans la configuration assemblée du dispositif électromagnétique 12.

Ainsi, une telle construction du dispositif électromagnétique 12 équivaut à une mise en série de deux freins.

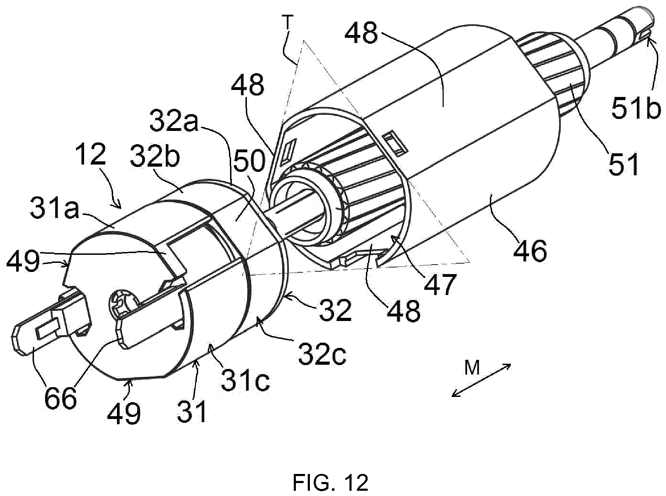

Avantageusement, l'électroaimant 31 comprend des connecteurs électriques 66, en particulier au nombre de deux, comme illustré à la figure 12, de sorte à relier électriquement l'électroaimant 31, en particulier la bobine 31b, à l'unité électronique de contrôle 15, en particulier au deuxième élément de commande 30, dans la configuration assemblée de l'actionneur électromécanique 7.

Avantageusement, la première garniture de friction 36 coopère, autrement dit est configurée pour coopérer, avec une face de contact 33a de la première mâchoire 33, dans la configuration assemblée du dispositif électromagnétique 12. La face de contact 33a de la première mâchoire 33 peut également être appelée première face de contact. En outre, la deuxième garniture de friction 37 coopère, autrement dit est configurée pour coopérer, avec une face de contact 35a de la deuxième mâchoire 35, dans la configuration assemblée du dispositif électromagnétique 12. La face de contact 35a de la deuxième mâchoire 35 peut également être appelée deuxième face de contact.

Avantageusement, la deuxième mâchoire 35 est formée par une paroi 32a de la culasse 32.

Avantageusement, la paroi 32a de la culasse 32 formant la deuxième mâchoire 35 est fixée au corps 32b de la culasse 32 au moyen d'éléments de fixation, non représentés.

Ici, les éléments de fixation de la paroi 32a de la culasse 32 sur le corps 32b de la culasse 32 sont des vis de fixation, en particulier au nombre de trois disposées à 120° l'une par rapport à l'autre, autour de l'axe de rotation X, dans la configuration assemblée du dispositif électromagnétique 12.

En pratique, chaque vis de fixation est insérée au travers d'un trou de passage 59 ménagé dans la paroi 32a de la culasse 32 et vissée au travers d'un trou de fixation 60 ménagé dans le corps 32b de la culasse 32, dans la configuration assemblée du dispositif électromagnétique 12.

Le type et le nombre d'éléments de fixation de la paroi de la culasse sur le corps de la culasse ne sont pas limitatifs et peuvent être différents. Il peut s'agir, notamment, de rivets ou d'éléments de fixation par encliquetage élastique et, par exemple, au nombre de deux disposés à 180° l'un par rapport à l'autre, autour de l'axe de rotation.

Avantageusement, la deuxième mâchoire 35 comprend une ouverture de passage 38 du rotor 51. Ici, l'ouverture 38 est disposée au centre de la deuxième mâchoire 35.

Avantageusement, le plateau 34 et la première mâchoire 33 sont disposés à l'intérieur d'un logement 40 de la culasse 32 et, plus particulièrement, entre la deuxième mâchoire 35 et une paroi d'extrémité 39 de la culasse 32.

Ici, la paroi d'extrémité 39 de la culasse 32 est disposée en vis-à-vis du corps 31a de l'électroaimant 31, dans la configuration assemblée du dispositif électromagnétique 12. En outre, la paroi d'extrémité 39 de la culasse 32 est disposée en vis-à-vis de la paroi 32a de la culasse 32 formant la deuxième mâchoire 35, dans la configuration assemblée du dispositif électromagnétique 12.

Avantageusement, la paroi d'extrémité 39 de la culasse 32 comprend une ouverture de passage 65 d'un arbre 43 solidaire de la première mâchoire 33. Ici, l'ouverture 65 est disposée au centre de la paroi d'extrémité 39 de la culasse 32.

La culasse 32 est configurée pour se déplacer par rapport au corps 31a de l'électroaimant 31, suivant la direction de l'axe de rotation X, dans la configuration assemblée du dispositif électromagnétique 12. La deuxième mâchoire 35 est configurée pour se déplacer par rapport à la première mâchoire 33, suivant la direction de l'axe de rotation X, dans la configuration assemblée du dispositif électromagnétique 12. En outre, le plateau 34 est configuré pour se déplacer par rapport à la première mâchoire 33, suivant la direction de l'axe de rotation X, dans la configuration assemblée du dispositif électromagnétique 12.

Ainsi, le plateau 34 et les première et deuxième mâchoires 33, 35 du dispositif électromagnétique 12 sont assemblés entre eux au moyen d'une liaison glissière.

La première garniture de friction 36 est assemblée contre une première face 34a du plateau 34. En outre, la deuxième garniture de friction 37 est assemblée contre une deuxième face 34b du plateau 34. La deuxième face 34b du plateau 34 est opposée à la première face 34a du plateau 34.

Avantageusement, les première et deuxième garnitures de friction 36, 37 sont assemblées respectivement sur les première et deuxième faces 34a, 34b du plateau 34 par collage.

La méthode d'assemblage des première et deuxième garnitures de friction respectivement sur les première et deuxième faces du plateau n'est pas limitative et peut être différente. Il peut s'agir, notamment, d'une méthode d'assemblage par boutonnage ou par surmoulage.

En variante, non représentée, la première garniture de friction 36 est assemblée contre une face de la première mâchoire 33. En outre, la deuxième garniture de friction 37 est assemblée contre une face de la deuxième mâchoire 35.

Avantageusement, chacune des première et deuxième garnitures de friction 36, 37 est réalisée sous la forme d'un anneau de friction.

Chacune des première et deuxième garnitures de friction 36, 37 peut également être appelée une garniture souple.

Avantageusement, chacune des première et deuxième garnitures de friction 36, 37 présente une dureté comprise dans une plage pouvant s'étendre entre 50 et 100 Shore D.

Avantageusement, chacune des première et deuxième garnitures de friction 36, 37 est réalisée en silicone.

La matière de chacune des première et deuxième garnitures de friction n'est pas limitative et peut être différente. Il peut s'agir, notamment, d'une matière composée à partir de liège.

Avantageusement, l'électroaimant 31, la culasse 32, les première et deuxième mâchoires 33, 35, le plateau 34 et les première et deuxième garnitures de friction 36, 37 sont alignés suivant un même axe, en particulier l'axe de rotation X.

L'axe de chacun des organes 31, 32, 33, 34, 35, 36, 37 du dispositif électromagnétique 12 n'est pas représenté sur les figures 5 à 12, de sorte à simplifier la lecture de celles-ci.

Avantageusement, le passage de l'état désactivé à l'état activé du dispositif électromagnétique 12, et inversement, est généré par l'électroaimant 31.

Ainsi, le passage de l'état désactivé à l'état activé du dispositif électromagnétique 12 est généré par une alimentation en énergie électrique de l'électroaimant 31, à partir de la source d'alimentation en énergie électrique auxiliaire 27. En outre, le passage de l'état activé à l'état désactivé du dispositif électromagnétique 12 est généré par une coupure de l'alimentation en énergie électrique de l'électroaimant 31, à partir de la source d'alimentation en énergie électrique auxiliaire 27.

Avantageusement, le plateau 34 du dispositif électromagnétique 12 est accouplé avec le rotor 51 du moteur électrique 11, en particulier au niveau de la première extrémité 51a du rotor 41, dans la configuration assemblée de l'actionneur électromécanique 7, par exemple par une liaison de type emmanchement en force.

Ainsi, le plateau 34 du dispositif électromagnétique 12 est entraîné en rotation par le rotor 51 du moteur électrique 11, lors de la mise en fonctionnement du moteur électrique 11.

En outre, dans cet exemple de réalisation, les première et deuxième garnitures de friction 36, 37 sont entraînées en rotation par le plateau 34, lors de la mise en fonctionnement du moteur électrique 11, puisque celles-ci sont solidaires du plateau 34.

Avantageusement, la première mâchoire 33 est solidaire du corps 31a de l'électroaimant 31, dans la configuration assemblée du dispositif électromagnétique 12.

Dans la configuration assemblée du dispositif électromagnétique 12, un entrefer E est ménagé entre le corps 31a de l'électroaimant 31 et la culasse 32 et, plus particulièrement, la paroi d'extrémité 39 de la culasse 32, au moins lorsque le dispositif électromagnétique 12 est dans son deuxième état.

Ainsi, dans la configuration assemblée du dispositif électromagnétique 12, un espace d'air est ménagé entre le corps 31a de l'électroaimant 31 et la culasse 32.

Avantageusement, lorsque le dispositif électromagnétique 12 est dans l'état désactivé, autrement dit non-alimenté en énergie électrique par la source d'alimentation en énergie électrique auxiliaire 27, l'entrefer E présente une première valeur E1. En outre, lorsque le dispositif électromagnétique 12 est dans l'état activé, autrement dit alimenté en énergie électrique par la source d'alimentation en énergie électrique auxiliaire 27, l'entrefer E présente une deuxième valeur E2. La deuxième valeur E2 de l'entrefer E est inférieure à la première valeur E1 de l'entrefer E.

A titre d'exemple nullement limitatif, la première valeur E1 de l'entrefer E présent entre le corps 31a de l'électroaimant 31 et la culasse 32, dans l'état désactivé du dispositif électromagnétique 12, est de l'ordre de quelques dixièmes de millimètre et, préférentiellement, de l'ordre de neuf dixièmes de millimètre. En outre, la deuxième valeur E2 de l'entrefer E présent entre le corps 31a de l'électroaimant 31 et la culasse 32, dans l'état activé du dispositif électromagnétique 12, est de l'ordre de quelques dixièmes de millimètre et, préférentiellement, de l'ordre de trois dixièmes de millimètre.

En variante, non représentée, la deuxième valeur E2 de l'entrefer E entre le corps 31a de l'électroaimant 31 et la culasse 32, dans l'état activé du dispositif électromagnétique 12, peut être nulle.

Une telle construction du dispositif électromagnétique 12 permet d'obtenir une surface de freinage agrandie avec les première et deuxième faces de contact 33a, 35a des première et deuxième mâchoires 33, 35 et, en particulier, une surface de freinage pouvant être doublée par rapport à un dispositif électromagnétique comprenant une seule surface de contact.

De cette manière, la consommation en veille du dispositif électromagnétique 12 et, plus particulièrement, de l'actionneur électromécanique 7 est minimisée.

Dans l'exemple de réalisation illustré aux figures 5 à 12 et mis en œuvre par la Demanderesse, les essais ont permis de constater un gain de 50% concernant la consommation en veille, en passant d'une consommation électrique de 6 watts à 3 watts, par rapport à un dispositif électromagnétique comprenant une seule surface de contact.

En outre, l'encombrement du dispositif électromagnétique 12 et, plus particulièrement, de l'actionneur électromécanique 7 est minimisé, puisque le diamètre des première et deuxième faces de contact 33a, 35a, donc de l'actionneur électromécanique 7, peut être réduit, tout en garantissant la performance de freinage souhaitée.

Par ailleurs, le coût d'obtention du dispositif électromagnétique 12 et, plus particulièrement, de l'actionneur électromécanique 7 est moins onéreux.

Dans l'exemple de réalisation illustré aux figures 5 à 12 et mis en œuvre par la Demanderesse, les essais ont permis de réduire le diamètre de l'actionneur électromécanique 7 d'une valeur de 60 millimètres à une valeur de 50 millimètres, par rapport à un dispositif électromagnétique comprenant une seule surface de contact.

Lorsque le dispositif électromagnétique 12 est dans l'état activé, c'est-à-dire alimenté en énergie électrique à partir de la source d'alimentation en énergie électrique auxiliaire 27, un courant électrique i circule à l'intérieur de l'électroaimant 31, de sorte à engendrer le champ magnétique C au niveau de celui-ci. Le champ magnétique C ainsi généré par l'électroaimant 31 attire la culasse 32 et, plus particulièrement, la deuxième mâchoire 35, vers l'électroaimant 31, en réduisant la valeur de l'entrefer E.

Ainsi, la première mâchoire 33, le plateau 34 et la deuxième mâchoire 35 sont déplacés les uns vers les autres puis maintenus en pression au moyen d'une force de freinage F générée par le champ magnétique C de l'électroaimant 31.

De cette manière, d'une part, le rotor 51 du moteur électrique 11 est immobile par rapport au dispositif électromagnétique 12, et, d'autre part, l'arbre de sortie 3 de l'actionneur électromécanique 7 est bloqué en rotation. En conséquence, le tube d'enroulement 4 est maintenu en position et, par conséquent, l'écran 3 du dispositif de protection 2 est immobile.

Plus particulièrement, dans l'état activé du dispositif électromagnétique 12, la deuxième mâchoire 35 est plaquée contre la deuxième garniture de friction 37 du plateau 34. En outre, la première garniture de friction 36 du plateau 34 est plaquée contre la première mâchoire 33.

Ainsi, la deuxième mâchoire 35 et la deuxième garniture de friction 37 sont en contact l'une avec l'autre, de sorte à générer une première partie F1 de la force F de freinage par friction du dispositif électromagnétique 12. En outre, la première garniture de friction 36 et la première mâchoire 33 sont en contact l'une avec l'autre, de sorte à générer une deuxième partie F2 de la force F de freinage par friction du dispositif électromagnétique 12.

De cette manière, le champ magnétique C généré par l'alimentation en énergie électrique de l'électroaimant 31, dans l'état activé du dispositif électromagnétique 12, permet de répartir la force F de freinage sur les deux faces opposées 34a, 34b du plateau 34, de sorte à garantir l'immobilisation de l'arbre de sortie 13.

En outre, le dispositif électromagnétique 12 est adapté à générer un couple de freinage, lorsque celui-ci est dans l'état activé, correspondant à la somme de la multiplication de la première partie F1 de la force de freinage F par un premier coefficient de frottement Cf1 et de la multiplication de la deuxième partie F2 de la force de freinage F par un deuxième coefficient de frottement Cf2.

Le premier coefficient Cf1 est défini en fonction de paramètres liés à la première garniture de friction 36 et à la première mâchoire 33, en particulier de leur matière et de leur diamètre. En outre, le deuxième coefficient de frottement Cf2 est défini en fonction de paramètres liés à la deuxième garniture de friction 37 et à la deuxième mâchoire 35, en particulier de leur matière et de leur diamètre.

Avantageusement, la première partie F1 de la force F peut prendre une première valeur égale à une deuxième valeur de la deuxième partie F2 de la force F.

Avantageusement, le premier coefficient Cf1 peut prendre une première valeur égale ou différente d'une deuxième valeur du deuxième coefficient de frottement Cf2.

Préférentiellement, l'état activé du dispositif électromagnétique 12 est atteint lorsqu'une tension d'alimentation en énergie électrique de l'électroaimant 31, à partir de la source d'alimentation en énergie électrique auxiliaire 27, est supérieure à une valeur seuil prédéterminée.

Lorsque le dispositif électromagnétique 12 est dans l'état désactivé, c'est-à-dire non-alimenté en énergie électrique à partir de la source d'alimentation en énergie électrique auxiliaire 27, aucun courant électrique i ne circule à l'intérieur de l'électroaimant 31, de sorte qu'aucun champ magnétique C n'est engendré au niveau de celui-ci.

Ainsi, la première mâchoire 33, le plateau 34 et la deuxième mâchoire 35 sont écartés les uns des autres, suite à la coupure de l'alimentation en énergie électrique de l'électroaimant 31, cette coupure ayant pour effet de générer un effort magnétique transitoire de répulsion de la culasse 32 par rapport à l'électroaimant 31.

De cette manière, d'une part, le rotor 51 du moteur électrique 11 est libre en rotation par rapport au dispositif électromagnétique 12 et, d'autre part, l'arbre de sortie 13 de l'actionneur électromécanique 7 peut être entraîné en rotation, soit par le poids de l'écran 3 et, éventuellement, de la barre de charge 8, soit par le moteur électrique 11, lors de l'alimentation en énergie électrique de ce dernier par le réseau d'alimentation en énergie électrique du secteur. Par conséquent, le tube d'enroulement 4 est entraîné en rotation et, ainsi, l'écran 3 du dispositif de protection 2 est mis en mouvement.

Plus particulièrement, la première mâchoire 33 est écartée de la première garniture de friction 36 assemblée sur le plateau 34, d'un jeu J1, de sorte à libérer la première garniture de friction 36 de la compression exercée par la première mâchoire 33 en direction du plateau 34. En outre, la deuxième mâchoire 35 est écartée de la deuxième garniture de friction 37 assemblée sur le plateau 34, d'un jeu J2, de sorte à libérer la deuxième garniture de friction 37 de la compression exercée par la deuxième mâchoire 35 en direction du plateau 34.

Ainsi, la coupure de l'alimentation en énergie électrique de l'électroaimant 31, dans l'état désactivé du dispositif électromagnétique 12, permet de répartir un jeu J1, J2, d'une part, entre la première mâchoire 33 et la première garniture de friction 36 et, d'autre part, entre la deuxième mâchoire 35 et la deuxième garniture de friction 37, au moyen de l'entrefer E entre le corps 31a de l'électroaimant 31 et la culasse 32, plus particulièrement la paroi d'extrémité 39, de sorte à garantir la libération de l'arbre de sortie 13.

De cette manière, les première et deuxième mâchoires 33, 35 du dispositif électromagnétique 12 peuvent être appelées flottantes, puisque celles-ci présentent un déplacement de l'une par rapport à l'autre et par rapport au plateau 34, suivant un mouvement de coulissement D suivant la direction de l'axe de rotation X.

Avantageusement, le jeu J1 peut prendre une première valeur égale ou différente d'une deuxième valeur du J2.

A titre d'exemple nullement limitatif, la première valeur du jeu J1 entre la première mâchoire 33 et la première garniture de friction 36 assemblée sur le plateau 34, dans l'état désactivé du dispositif électromagnétique 12, est de l'ordre de quelques dixièmes de millimètre et, préférentiellement, de l'ordre de trois dixièmes de millimètre. En outre, la deuxième valeur du jeu J2 entre la deuxième mâchoire 35 et la deuxième garniture de friction 37 assemblée sur le plateau 34, dans l'état activé du dispositif électromagnétique 12, est de l'ordre de quelques dixièmes de millimètre et, préférentiellement, de l'ordre de trois dixièmes de millimètre.

Avantageusement, le dispositif électromagnétique 12 comprend un dispositif de réglage en position 42 de la première mâchoire 33 par rapport au corps 31a de l'électroaimant 31, en particulier suivant la direction de l'axe de rotation X. Le dispositif de réglage en position 42 est configuré pour mettre en œuvre, autrement dit met en œuvre, un réglage de la position de la première mâchoire 33 par rapport à la deuxième mâchoire 35 et au plateau 34, de sorte à garantir l'atteinte des états activé et désactivé du dispositif électromagnétique 12.

Avantageusement, le dispositif de réglage en position 42 comprend une première partie formée par l'arbre 43 de la première mâchoire 33. Cet arbre 43 de la première mâchoire 33 comprend au moins une partie filetée 43a. Le dispositif de réglage en position 42 comprend une deuxième partie formée par un alésage 44 du corps 31a de l'électroaimant 31. Cet alésage 44 du corps 31a de l'électroaimant 31 comprend au moins une partie taraudée 44a. En outre, la partie filetée 43a de l'arbre 43 est vissée dans la partie taraudée 44a de l'alésage 44, dans la configuration assemblée du dispositif électromagnétique 12.

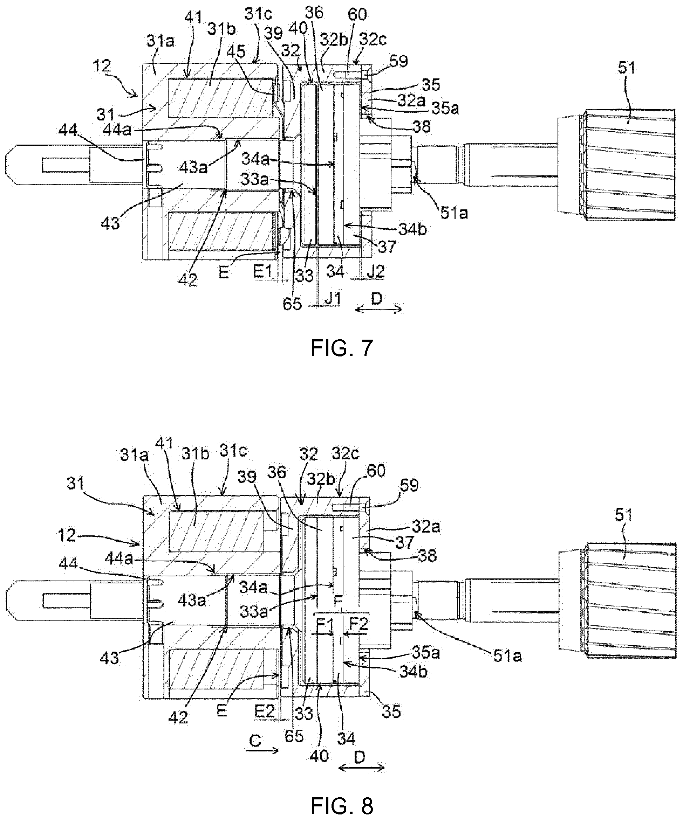

Avantageusement, le dispositif électromagnétique 12 comprend un élément ressort 45, tel qu'illustré aux figures 5 et 7. L'élément ressort 45 est disposé entre le corps 31a de l'électroaimant 31 et la culasse 32 au niveau de l'entrefer E, dans la configuration assemblée du dispositif électromagnétique 12.

Ainsi, l'élément ressort 45 permet de libérer la culasse 32, en particulier la deuxième mâchoire 35, par rapport au corps 31a de l'électroaimant 31, lors du passage de l'état activé à l'état désactivé du dispositif électromagnétique 12, autrement dit lors de la coupure de l'alimentation en énergie électrique du dispositif électromagnétique 12 à partir de la source d'alimentation en énergie électrique auxiliaire 27.

De cette manière, l'élément ressort 45 permet de faciliter le mouvement de coulissement D de la deuxième mâchoire 35 par rapport à la première mâchoire 33, suivant la direction de l'axe de rotation X, lorsque le dispositif électromagnétique 12 est désactivé, en créant le jeu J1, J2.

En outre, lors de la mise en fonctionnement du moteur électrique 11 pour le déplacement de l'écran 3, en particulier l'enroulement de ce dernier autour du tube d'enroulement 4, le fonctionnement de l'actionneur électromécanique 7 n'est pas perturbé par une zone de frottement entre des éléments du dispositif électromagnétique 12.

Avantageusement, l'élément ressort 45 est réalisé sous la forme d'une rondelle ressort, en particulier de forme ondulée.

En variante, le dispositif électromagnétique 12 peut être dépourvu de l'élément ressort 45.

Avantageusement, le dispositif électromagnétique 12 comprend un boîtier 46, comme illustré uniquement à la figure 12. Le boîtier 46 comprend un logement 47 à l'intérieur duquel sont logés l'électroaimant 31, la culasse 32, les première et deuxième mâchoires 33, 35, le plateau 34, ainsi que les première et deuxième garnitures de friction 36, 37.

Avantageusement, l'électroaimant 31 et la culasse 32 sont disposés à l'intérieur du boîtier 46 suivant un mouvement de coulissement M, suivant l'axe de rotation X.

Ainsi, une liaison glissière est réalisée, d'une part, entre le boîtier 46 et l'électroaimant 31 et, d'autre part, entre le boîtier 46 et la culasse 32.

Avantageusement, le boîtier 46 comprend une pluralité de méplats 48. Chaque méplat 48 du boîtier 46 coopère, autrement dit est configuré pour coopérer, avec un méplat 49, 50 d'une paroi extérieure 31c du corps 31a de l'électroaimant 31 et d'une paroi extérieure 32c de la culasse 32, en particulier de la paroi 32a et du corps 32b de la culasse 32, dans la configuration assemblée du dispositif électromagnétique 12.

Ainsi, la liaison glissière réalisée, d'une part, entre le boîtier 46 et l'électroaimant 31 et, d'autre part, entre le boîtier 46 et la culasse 32 est mise en œuvre au moyen des méplats 48 du boîtier 46 et des méplats 49, 50 de la paroi extérieure 31c du corps 31a de l'électroaimant 31 et de la paroi extérieure 32c de la culasse 32.

Avantageusement, une section du boîtier 46, suivant l'axe de rotation X, présente une forme générale triangulaire T. En outre, la forme générale triangulaire T de la section du boîtier 46 coopère, autrement dit est configurée pour coopérer, avec la paroi extérieure 31c du corps 31a de l'électroaimant 31 et avec la paroi extérieure 32c de la culasse 32, dans la configuration assemblée du dispositif électromagnétique 12.

Ici, la forme générale triangulaire T de la section du boîtier 46 est réalisée par l'intermédiaire des méplats 48.

Avantageusement, le boîtier 46 coopère, autrement dit est configuré pour coopérer, avec le carter 20 de l'actionneur électromécanique 7, de sorte à bloquer en rotation le dispositif électromagnétique 12 à l'intérieur du carter 20, en particulier par l'intermédiaire des méplats 48 du boîtier 46.

Grâce à la présente invention, une telle construction du dispositif électromagnétique permet d'obtenir une surface de freinage agrandie avec des première et deuxième faces de contact appartenant aux première et deuxième mâchoires et, en particulier, une surface de freinage pouvant être doublée par rapport à un dispositif électromagnétique comprenant une seule surface de contact.

De cette manière, la consommation en veille du dispositif électromagnétique et, plus particulièrement, de l'actionneur électromécanique est minimisée.

En outre, l'encombrement du dispositif électromagnétique et, plus particulièrement, de l'actionneur électromécanique est minimisé, puisque le diamètre de l'actionneur électromécanique peut être réduit, tout en garantissant la performance de freinage souhaitée.

Par ailleurs, le coût d'obtention du dispositif électromagnétique et, plus particulièrement, de l'actionneur électromécanique est moins onéreux.

Bien entendu, de nombreuses modifications peuvent être apportées aux exemples de réalisation décrits précédemment sans sortir du cadre de l'invention.

En outre, les modes de réalisation et variantes envisagés peuvent être combinés pour générer de nouveaux modes de réalisation de l'invention.

## Revendications

1. Actionneur électromécanique (7) pour une installation de protection contre un incendie (1),
l'actionneur électromécanique (7) comprenant au moins :
- un carter (20),
- un moteur électrique (11),
- un dispositif électromagnétique (12), et
- un arbre de sortie (13),
le dispositif électromagnétique (12) comprenant au moins :
- un électroaimant (31), l'électroaimant (31) comprenant au moins un corps (31a) et une bobine (31b),
- une culasse (32), le corps (31a) de l'électroaimant (31) étant disposé en vis-à-vis de la culasse (32), dans une configuration assemblée du dispositif électromagnétique (12),
- une première mâchoire (33), et
- un plateau (34), le plateau (34) étant configuré pour se déplacer par rapport à la première mâchoire (33), suivant la direction d'un axe de rotation (X), dans la configuration assemblée du dispositif électromagnétique (12),
le dispositif électromagnétique (12) présentant un premier état, dans lequel le dispositif électromagnétique (12) bloque l'arbre de sortie (13) de l'actionneur électromécanique (7) en rotation par rapport au carter (20), et un deuxième état, dans lequel l'arbre de sortie (13) de l'actionneur électromécanique (7) est libre en rotation par rapport au carter (20),
**caractérisé en ce que** le dispositif électromagnétique (12) comprend également au moins :
- une deuxième mâchoire (35), le plateau (34) étant disposé entre les première et deuxième mâchoires (33, 35), dans la configuration assemblée du dispositif électromagnétique (12), la deuxième mâchoire (35) étant configurée pour se déplacer par rapport à la première mâchoire (33), suivant la direction de l'axe de rotation (X), dans la configuration assemblée du dispositif électromagnétique (12),
- une première garniture de friction (36) et une deuxième garniture de friction (37), la première garniture de friction (36) étant disposée entre la première mâchoire (33) et le plateau (34), dans la configuration assemblée du dispositif électromagnétique (12), la deuxième garniture de friction (37) étant disposée entre la deuxième mâchoire (35) et le plateau (34), dans la configuration assemblée du dispositif électromagnétique (12), la première garniture de friction (36) étant assemblée contre une première face (34a) du plateau (34), la deuxième garniture de friction (37) étant assemblée contre une deuxième face (34b) du plateau (34), la deuxième face (34b) du plateau (34) étant opposée à la première face (34a) du plateau (34),
**en ce que** la culasse (32) est configurée pour se déplacer par rapport au corps (31a) de l'électroaimant (31), suivant la direction de l'axe de rotation (X), dans la configuration assemblée du dispositif électromagnétique (12),
et **en ce que**, dans la configuration assemblée du dispositif électromagnétique (12), un entrefer (E) est ménagé entre le corps (31a) de l'électroaimant (31) et une paroi d'extrémité (39) de la culasse (32), au moins lorsque le dispositif électromagnétique (12) est dans son deuxième état.

2. Actionneur électromécanique (7) pour une installation de protection contre un incendie (1) selon la revendication 1, dans lequel le premier état du dispositif électromagnétique (12) est un état activé, où le dispositif électromagnétique (12) est alimenté en énergie électrique, et dans lequel le deuxième état du dispositif électromagnétique (12) est un état désactivé, où le dispositif électromagnétique (12) n'est pas alimenté en énergie électrique.

3. Actionneur électromécanique (7) pour une installation de protection contre un incendie (1) selon la revendication 2, dans lequel, lorsque le dispositif électromagnétique (12) est dans l'état activé, un courant électrique (i) circule à l'intérieur de l'électroaimant (31), de sorte à engendrer un champ magnétique (C) au niveau de l'électroaimant (31), le champ magnétique (C) ainsi généré par l'électroaimant (31) attirant la culasse (32).

4. Actionneur électromécanique (7) pour une installation de protection contre un incendie (1) selon l'une quelconque des revendications 1 à 3, dans lequel le dispositif électromagnétique (12) comprend un élément ressort (45), l'élément ressort (45) étant disposé entre le corps (31a) de l'électroaimant (31) et la culasse (32) au niveau de l'entrefer (E), dans la configuration assemblée du dispositif électromagnétique (12).

5. Actionneur électromécanique (7) pour une installation de protection contre un incendie (1) selon l'une quelconque des revendications 1 à 4, dans lequel la première mâchoire (33) est solidaire du corps (31a) de l'électroaimant (31), dans la configuration assemblée du dispositif électromagnétique (12).

6. Actionneur électromécanique (7) pour une installation de protection contre un incendie (1) selon la revendication 2 ou selon la revendication 3, dans lequel le dispositif électromagnétique (12) comprend un dispositif de réglage en position (42) de la première mâchoire (33) par rapport au corps (31a) de l'électroaimant (31), le dispositif de réglage en position (42) étant configuré pour mettre en œuvre un réglage de la position de la première mâchoire (33) par rapport à la deuxième mâchoire (35) et au plateau (34), de sorte à garantir l'atteinte des états activé et désactivé du dispositif électromagnétique (12).

7. Actionneur électromécanique (7) pour une installation de protection contre un incendie (1) selon l'une quelconque des revendications 1 à 6, dans lequel le plateau (34) du dispositif électromagnétique (12) est accouplé avec un rotor (51) du moteur électrique (11), dans une configuration assemblée de l'actionneur électromécanique (7).

8. Actionneur électromécanique (7) pour une installation de protection contre un incendie (1) selon l'une quelconque des revendications 1 à 7, dans lequel la deuxième mâchoire (35) est formée par une paroi (32a) de la culasse (32).

9. Actionneur électromécanique (7) pour une installation de protection contre un incendie (1) selon l'une quelconque des revendications 1 à 8, dans lequel le plateau (34) et la première mâchoire (33) sont disposés à l'intérieur d'un logement (40) de la culasse (32).

10. Installation de protection contre un incendie (1) comprenant un écran (3) enroulable sur un tube d'enroulement (4) entraîné en rotation par un actionneur électromécanique (7), dans laquelle l'actionneur électromécanique (7) est conforme à l'une quelconque des revendications 1 à 9.

## Patentansprüche

1. Elektromechanische Stellantriebsvorrichtung (7) für eine Brandschutzanlage (1),
wobei die elektromechanische Stellantriebsvorrichtung (7) mindestens umfasst:
- ein Gehäuse (20),
- einen elektrischen Motor (11),
- eine elektromagnetische Vorrichtung (12) und
- eine Ausgangswelle (13),
wobei die elektromagnetische Vorrichtung (12) mindestens umfasst:
- einen Elektromagneten (31), wobei der Elektromagnet (31) mindestens einen Körper (31a) und eine Spule (31b) umfasst,
- ein Joch (32), wobei der Körper (31a) des Elektromagneten (31) in einer zusammengesetzten Konfiguration der elektromagnetischen Vorrichtung (12) gegenüber dem Joch (32) angeordnet ist,
- eine erste Backe (33) und
- einen Teller (34), wobei der Teller (34) ausgebildet ist, sich in Bezug auf die erste Backe (33) gemäß der Richtung einer Drehachse (X) in der zusammengesetzten Konfiguration der elektromagnetischen Vorrichtung (12) zu verschieben,
wobei die elektromagnetische Vorrichtung (12) einen ersten Zustand, in dem die elektromagnetische Vorrichtung (12) die Ausgangswelle (13) der elektromechanischen Stellantriebsvorrichtung (7) hinsichtlich der Drehung in Bezug auf das Gehäuse (20) blockiert, und einen zweiten Zustand aufweist, in dem die Ausgangswelle (13) der elektromechanischen Stellantriebsvorrichtung (7) in Bezug auf das Gehäuse (20) frei drehbeweglich ist,
**dadurch gekennzeichnet, dass** die elektromagnetische Vorrichtung (12) auch mindestens umfasst:
- eine zweite Backe (35), wobei der Teller (34) zwischen der ersten und zweiten Backe (33, 35) in der zusammengesetzten Konfiguration der elektromagnetischen Vorrichtung (12) angeordnet ist, wobei die zweiten Backe (35) ausgebildet ist, sich in Bezug auf die erste Backe (33) gemäß der Richtung der Drehachse (X) in der zusammengesetzten Konfiguration der elektromagnetischen Vorrichtung (12) zu verschieben,
- einen ersten Reibbelag (36) und einen zweiten Reibbelag (37), wobei der erste Reibbelag (36) zwischen der ersten Backe (33) und dem Teller (34) in der zusammengesetzten Konfiguration der elektromagnetischen Vorrichtung (12) angeordnet ist und der zweite Reibbelag (37) zwischen der zweiten Backe (35) und dem Teller (34) in der zusammengesetzten Konfiguration der elektromagnetischen Vorrichtung (12) angeordnet ist, wobei der erste Reibbelag (36) gegen eine erste Seite (34a) des Tellers (34) gefügt ist und der zweite Reibbelag (37) gegen eine zweite Seite (34b) des Tellers (34) gefügt ist, wobei die zweite Seite (34b) des Tellers (34) entgegengesetzt zur ersten Seite (34a) des Tellers (34) liegt,
dass das Joch (32) ausgebildet ist, sich in Bezug auf den Körper (31a) des Elektromagneten (31) gemäß der Richtung der Drehachse (X) in der zusammengesetzten Konfiguration der elektromagnetischen Vorrichtung (12) zu verschieben,
und dass in der zusammengesetzten Konfiguration der elektromagnetischen Vorrichtung (12) ein Luftspalt (E) zwischen dem Körper (31a) des Elektromagneten (31) und einer Stirnwand (39) des Jochs (32) zumindest, wenn die elektromagnetische Vorrichtung (12) in ihrem zweiten Zustand ist, eingearbeitet ist.

2. Elektromagnetische Stellantriebsvorrichtung (7) für eine Brandschutzanlage (1) nach Anspruch 1, bei der der erste Zustand der elektromagnetischen Vorrichtung (12) ein aktivierter Zustand ist, bei dem die elektromagnetische Vorrichtung (12) mit elektrischer Energie gespeist wird, und bei der der zweite Zustand der elektromagnetischen Vorrichtung (12) ein deaktivierter Zustand ist, bei dem die elektromagnetische Vorrichtung (12) nicht mit elektrischer Energie gespeist wird.

3. Elektromagnetische Stellantriebsvorrichtung (7) für eine Brandschutzanlage (1) nach Anspruch 2, bei der, wenn die elektromagnetische Vorrichtung (12) in dem aktivierten Zustand ist, ein elektrischer Strom (i) im Inneren des Elektromagneten (31) fließt, um ein Magnetfeld (C) am Elektromagneten (31) zu erzeugen, wobei das so von dem Elektromagneten (31) erzeugte Magnetfeld (C) das Joch (32) anzieht.

4. Elektromagnetische Stellantriebsvorrichtung (7) für eine Brandschutzanlage (1) nach einem beliebigen der Ansprüche 1 bis 3, bei der die elektromagnetische Vorrichtung (12) ein Federelement (45) umfasst, wobei das Federelement (45) zwischen dem Körper (31a) des Elektromagneten (31) und dem Joch (32) am Luftspalt (E) in der zusammengesetzten Konfiguration der elektromagnetischen Vorrichtung (12) angeordnet ist.

5. Elektromagnetische Stellantriebsvorrichtung (7) für eine Brandschutzanlage (1) nach einem beliebigen der Ansprüche 1 bis 4, bei der die erste Backe (33) mit dem Körper (31a) des Elektromagneten (31) in der zusammengesetzten Konfiguration der elektromagnetischen Vorrichtung (12) verbunden ist.

6. Elektromagnetische Stellantriebsvorrichtung (7) für eine Brandschutzanlage (1) nach Anspruch 2 oder nach Anspruch 3, bei der die elektromagnetische Vorrichtung (12) eine Vorrichtung zur Positionseinstellung (42) der ersten Backe (33) in Bezug auf den Körper (31a) des Elektromagneten (31) umfasst, wobei die Vorrichtung zur Positionseinstellung (42) ausgebildet ist, eine Einstellung der Position der ersten Backe (33) in Bezug auf die zweite Backe (35) und auf den Teller (34) durchzuführen, um das Erreichen des aktivierten und deaktivierten Zustands der elektromagnetischen Vorrichtung (12) sicherzustellen.

7. Elektromagnetische Stellantriebsvorrichtung (7) für eine Brandschutzanlage (1) nach einem beliebigen der Ansprüche 1 bis 6, bei der der Teller (34) der elektromagnetischen Vorrichtung (12) mit einem Rotor (51) des elektrischen Motors (11) in einer zusammengesetzten Konfiguration der elektromechanischen Stellantriebsvorrichtung (7) gekoppelt ist.

8. Elektromagnetische Stellantriebsvorrichtung (7) für eine Brandschutzanlage (1) nach einem beliebigen der Ansprüche 1 bis 7, bei der die zweite Backe (35) von einer Wand (32a) des Jochs (32) gebildet wird.

9. Elektromagnetische Stellantriebsvorrichtung (7) für eine Brandschutzanlage (1) nach einem beliebigen der Ansprüche 1 bis 8, bei der der Teller (34) und die erste Backe (33) im Inneren eines Aufnahmeraums (40) des Jochs (32) angeordnet sind.

10. Brandschutzanlage (1), die einen Schirm (3) umfasst, der auf ein Wickelrohr (4) aufrollbar ist, das von einer elektromechanischen Stellantriebsvorrichtung (7) zur Drehung angetrieben wird, wobei die elektromechanische Stellantriebsvorrichtung (7) nach einem der Ansprüche 1 bis 9 ausgebildet ist.

## Claims

1. Electromechanical actuator (7) for a fire protection installation (1),
the electromechanical actuator (7) comprising at least:
- a casing (20),
- an electric motor (11),
- an electromagnetic device (12), and
- an output shaft (13),
the electromagnetic device (12) comprising at least:
- an electromagnet (31), the electromagnet (31) comprising at least a body (31a) and a coil (31b),
- a yoke (32), the body (31a) of the electromagnet (31) being arranged facing the yoke (32), in an assembled configuration of the electromagnetic device (12),
- a first jaw (33), and
- a plate (34), the plate (34) being configured to move relative to the first jaw (33), in the direction of an axis of rotation (X), in the assembled configuration of the electromagnetic device (12),
the electromagnetic device (12) having a first state, in which the electromagnetic device (12) blocks the rotation of the output shaft (13) of the electromechanical actuator (7) relative to the casing (20), and a second state, in which the output shaft (13) of the electromechanical actuator (7) is free to rotate relative to the casing (20),
**characterised in that** the electromagnetic device (12) also comprises at least:
- a second jaw (35), the plate (34) being arranged between the first and second jaws (33, 35), in the assembled configuration of the electromagnetic device (12), the second jaw (35) being configured to move relative to the first jaw (33), in the direction of the axis of rotation (X), in the assembled configuration of the electromagnetic device (12),
- a first friction lining (36) and a second friction lining (37), the first friction lining (36) being arranged between the first jaw (33) and the plate (34), in the assembled configuration of the electromagnetic device (12), the second friction lining (37) being arranged between the second jaw (35) and the plate (34), in the assembled configuration of the electromagnetic device (12), the first friction lining (36) being fitted against a first face (34a) of the plate (34), the second friction lining (37) being fitted against a second face (34b) of the plate (34), the second face (34b) of the plate (34) being opposite the first face (34a) of the plate (34),
**in that** the yoke (32) is configured to move relative to the body (31a) of the electromagnet (31), in the direction of the axis of rotation (X), in the assembled configuration of the electromagnetic device (12),
and **in that**, in the assembled configuration of the electromagnetic device (12), an air gap (E) is formed between the body (31a) of the electromagnet (31) and an end wall (39) of the yoke (32), at least when the electromagnetic device (12) is in its second state.

2. Electromechanical actuator (7) for a fire protection installation (1) according to claim 1, wherein the first state of the electromagnetic device (12) is an activated state, in which the electromagnetic device (12) is supplied with power, and wherein the second state of the electromagnetic device (12) is a deactivated state, in which the electromagnetic device (12) is not supplied with power.

3. Electromechanical actuator (7) for a fire protection installation (1) according to claim 2, wherein, when the electromagnetic device (12) is in the activated state, an electric current (i) flows inside the electromagnet (31), so as to generate a magnetic field (C) in the region of the electromagnet (31), the magnetic field (C) so generated by the electromagnet (31) attracting the yoke (32).

4. Electromechanical actuator (7) for a fire protection installation (1) according to any one of claims 1 to 3, wherein the electromagnetic device (12) comprises a spring element (45), the spring element (45) being arranged between the body (31a) of the electromagnet (31) and the yoke (32) in the region of the air gap (E), in the assembled configuration of the electromagnetic device (12).

5. Electromechanical actuator (7) for a fire protection installation (1) according to any one of claims 1 to 4, wherein the first jaw (33) is secured to the body (31a) of the electromagnet (31), in the assembled configuration of the electromagnetic device (12).

6. Electromechanical actuator (7) for a fire protection installation (1) according to claim 2 or according to claim 3, wherein the electromagnetic device (12) comprises a position-adjusting device (42) for adjusting the position of the first jaw (33) relative to the body (31a) of the electromagnet (31), the position-adjusting device (42) being configured to carry out an adjustment of the position of the first jaw (33) relative to the second jaw (35) and to the plate (34), so as to ensure that the activated and deactivated states of the electromagnetic device (12) are achieved.

7. Electromechanical actuator (7) for a fire protection installation (1) according to any one of claims 1 to 6, wherein the plate (34) of the electromagnetic device (12) is coupled with a rotor (51) of the electric motor (11), in an assembled configuration of the electromechanical actuator (7).

8. Electromechanical actuator (7) for a fire protection installation (1) according to any one of claims 1 to 7, wherein the second jaw (35) is formed by a wall (32a) of the yoke (32).

9. Electromechanical actuator (7) for a fire protection installation (1) according to any one of claims 1 to 8, wherein the plate (34) and the first jaw (33) are arranged inside a housing (40) of the yoke (32).

10. Fire protection installation (1) comprising a screen (3) which is able to be wound on a winding tube (4) which is driven in rotation by an electromechanical actuator (7), wherein the electromechanical actuator (7) is in accordance with any one of claims 1 to 9.
